# EUROPEAN PATENT SPECIFICATION

(11) **EP 1 614 570 B1**
(45) Date of publication and mention of the grant of the patent: **18.07.2007**
(21) Application number: 05109291.4
(22) Date of filing: 30.05.2002
(51) Int. Cl.: B60J 7/043

(54) **Open roof construction for a vehicle**
Zu öffnende Fahrzeugdachkonstruktion
Toit ouvrant de véhicule

(43) Date of publication of application: 11.01.2006
(62) Divisional of application: 02738966.7
(73) Proprietor: Inalfa Roof Systems Group B.V., 5804 AH Venray (NL)
(72) Inventor: Boutin, Robert Joseph, Madison Heights MI 48071 (US); Sieting, Todd Andrew, Holly MI 48442 (US)
(74) Representative: Voncken, Bartholomeus Maria Ch.

(56) References cited:
- EP-A- 0 296 644
- DE-C- 19 713 348
- US-A- 4 893 869
- US-A- 4 995 667
- US-A1- 2002 021 031

## Description

The invention relates to a novel open roof construction for a vehicle of the type known from, for example, EP-A-0296644 or US-A-4995667.

Such a known open roof construction for a vehicle is provided with a roof opening defined in a fixed roof construction of the vehicle, and a panel-shaped closure means for the roof opening movable between a closing position for closing said roof opening and an opening position for at least partially exposing said roof opening, said closure means having a forward edge and a rearward edge, wherein during transition of the closure means from one of said positions towards the other of said positions at least one of said forward and rearward edges of the closure means also is moved in a direction towards or away from, respectively, the fixed roof construction, and wherein a guide mechanism is provided for the movement of at least one of said edges of the closure means, said guide mechanism comprising:
- a stationary guiding attached to the fixed roof construction and extending in the longitudinal direction of the vehicle;
- a slide engaging the guiding and being driven by a drive means for a guided movement along the guiding;
- a link member having a first end that hingeably engages the closure means and an opposite second end that slidingly and hingeably engages the stationary guiding,
and which link member further is provided with means operatively connecting it to the slide in such a manner, that when the slide moves from a position in which the closure means closes the roof opening towards a position in which the closure means exposes the roof opening the link member firstly rotates such as to move the respective edge of the closure means away from the fixed roof construction and thereafter moves along with the slide while maintaining its rotated position such as to move the closure means substantially in parallel to the guiding.

It is an object of the present invention to further improve such an open roof construction for a vehicle.

The characteristic features of the open roof construction in accordance with the present invention are defined in the independent claim 1.

By means of such an open roof construction the movement of the closure means is realised in an effective manner.

Preferred embodiments of the open roof construction according to the present invention are described in the depending subclaims.

Hereinafter the invention will be elucidated while referring to the drawing, in which an examplary embodiment of the open roof construction according to the invention is illustrated.

Figure 1 shows an embodiment of a first guide mechanism in a first position thereof;
figure 2 shows the same guide mechanism in a second position thereof;
figure 3 shows the same guide mechanism in a third position thereof;
figure 4 shows the same guide mechanism in a fourth position thereof;
figure 5 shows a second guide mechanism in a first position thereof;
figure 6 shows said second guide mechanism in a second position thereof;
figure 7 shows said second guide mechanism in a third position thereof;
figure 8 shows, schematically, an embodiment of a coupling member in a first position thereof;
figure 9 shows said coupling member in a second position thereof, and
figure 10 shows, schematically, part of a vehicle provided with an open roof construction in accordance with the present invention.

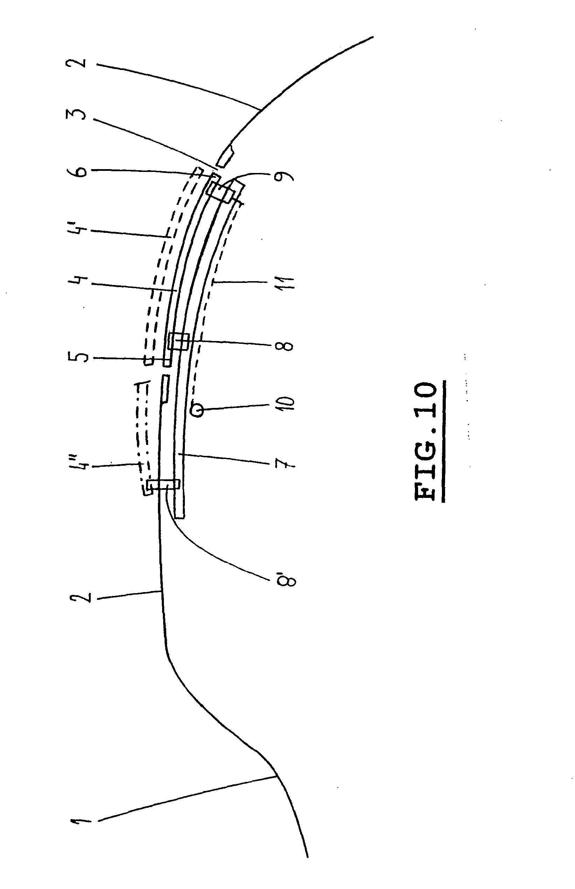

Firstly referring tot figure 10 there is schematically shown a vehicle 1 with a fixed roof construction 2. A roof opening 3 is defined in the fixed roof construction 2 and a panel-shaped closure means 4 is provided which is movable between a closing position 4 (indicated in full lines) for closing said roof opening 3 and an opening position 4" (indicated in chain dotted lines) for at least partially exposing said roof opening 3. While moving from the closing position toward the opening position, the closure means 4 firstly reaches a position 4'(indicated in dotted lines) and then moves towards the opening position 4".

The closure means 4 has a forward edge 5 and a rearward edge 6 (as seen in the longitudinal direction of the vehicle 1) which each co-operate with a stationary guiding 7 by means of forward and rearward, respectively, means 8 and 9. It is noted, that the position of the closure means, stationary guiding 7 and forward and rearward means 8 and 9 is only schematically indicated in figure 10. Further one can see, that in the opening position of the closure means 4" the forward means 8 has reached a new position 8'. The same applies for the rearward means 9 but this has not been indicated in this figure.

In the embodiment shown in figure 10 a drive member 10 (for example an electric motor) is shown connected to the rearward means 9 through a drive means 11 (for a example a Bowden cable) for operating the open roof construction.

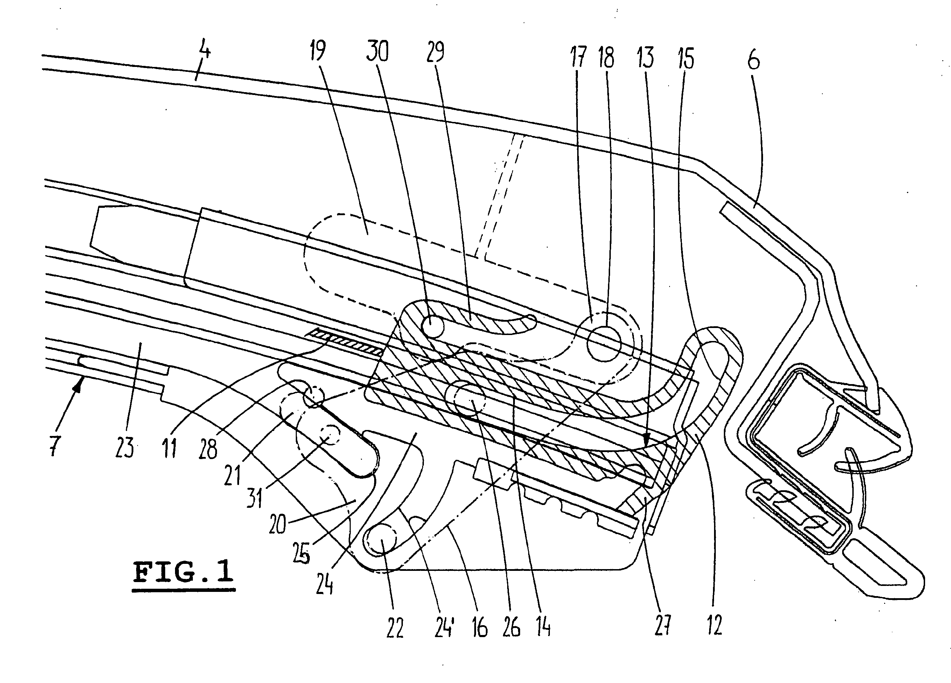

For explaining the guide mechanism of the rearward edge 6 of the closure means 4, now reference is made to figures 1-4 illustrating successive positions of such a guide mechanism.

Firstly referring to figure 1, the most rearward section of the stationary guiding 7 together with the rearward edge 6 of the closure means 4 are illustrated. As indicated before, the stationary guiding 7 is attached to the fixed roof construction 2 of the vehicle 1 and extends basically in the longitudinal direction of the vehicle. A slide 12 (shown in a hatched manner) engages the guiding 7 and is driven by the drive means 11 for a guided movement along the guiding 7. The slide 12 is provided with a curved track 13 comprising a first part 14 extending substantially in parallel to the direction of movement of the slide 12 along the stationary guiding 7, and an arc-shaped second part 15 diverging therefrom towards the closure means 4.

Further, there is provided a link member 16 having a first end 17 that hingeably 18 engages an arm 19 attached to the closure means 4. The link member 16 further has an opposite second end 20 to which is rotatably attached a first link member guide 21 (e.g. a slide block). A second link member guide 22 (e.g. a slide pin) is also attached to the opposite second end 20 of the link member 16.

The stationary guiding 7 comprises a first link member guide track 23 that houses the first link member guide 21 of the link member 16. Further, the stationary guiding 7 comprises a second link member guide track 24, 24' which has a first section 24 extending in parallel to the first link member guide track 23, and an arc-shaped second section 24' extending transversely thereto. The second link member guide 22 co-operates with said second link member guide track 24, 24' in a manner to be described later.

As can be seen in figure 1, the first link member guide 21 and second link member guide 22 are spaced apart some distance.

The end of the first link member guide track 23 defines a stop 25 limiting the extreme position of the first link member guide 21.

The link member 16 further is provided with a coupling pin 26 positioned somewhere between its first end 17 and opposite second end 20. This coupling pin 26 is housed within the curved track 13 of the slide 12.

The slide 12 also is provided with a hook member 27 which, in a manner to be described later, can engage a co-operating part 28 of the link member 16. Further the slide 12 is provided with a locking member shaped as a hook 29 for locking a pin 30 attached to the closure means 4 when the latter is in its closing position as illustrated in figure 1.

The rearward guide mechanism operates in the following manner: starting from the closing position of the closure means 4 illustrated in figure 1, an activation of the drive means 11 by means of the drive member 10 will move the slide 12 to the left. During this motion the coupling pin 26 of the link member 16 firstly moves through the first part 14 of the curved track 13. Meanwhile the locking member 29 will disengage the pin 30 of the closure means 4. During this first stage of the movement of the slide 12 the link member 16 will maintain its position as shown in figure 1, in which its first link member guide 21 rests against the stop 25, while its second link member guide 22 is positioned at the end of the arc-shaped second section 24' of the second link member guide track.

When the slide 12 has moved to the left (as seen in figure 1) sufficiently, the coupling pin 26 of the link member 16 reaches the arc-shaped second part 15 of the curved track 13 of the slide 12, and thus a rotation of the link member 16 will occur. This rotation is enabled by an axis of rotation 31 between the link member 16 and its first link member guide 21. During this rotation of the link member 16 the second link member guide 22 moves through the arc-shaped second section 24' of the second link member guide track. As long as the second link member guide 22 is within the arc-shaped second section 24" the first link member guide 21 will not move in the first link member guide track 23.

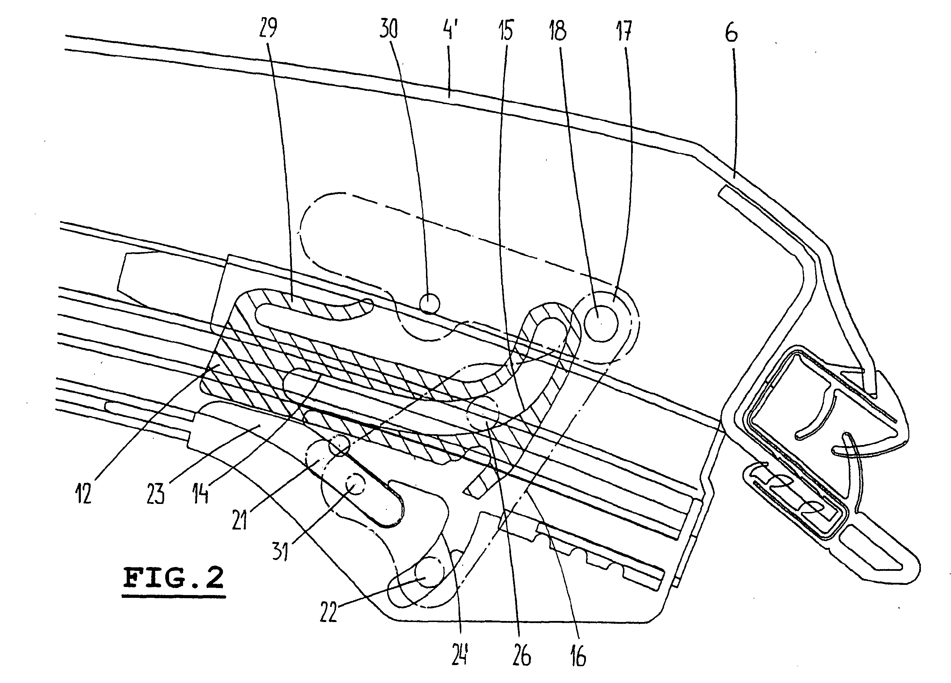

As a result of the rotation of the link member 16, its first end 17 with hingeable connection 18 to the closure means 4 will move away from the fixed roof construction or stationary guiding 7, and as a result the rearward edge 6 of the closure means 4 will move in a direction away from the fixed roof construction (or stationary guiding 7). It is noted that during this movement of the closure means 4 it also will move slightly in a forward direction (to the left as seen in fig. 2).

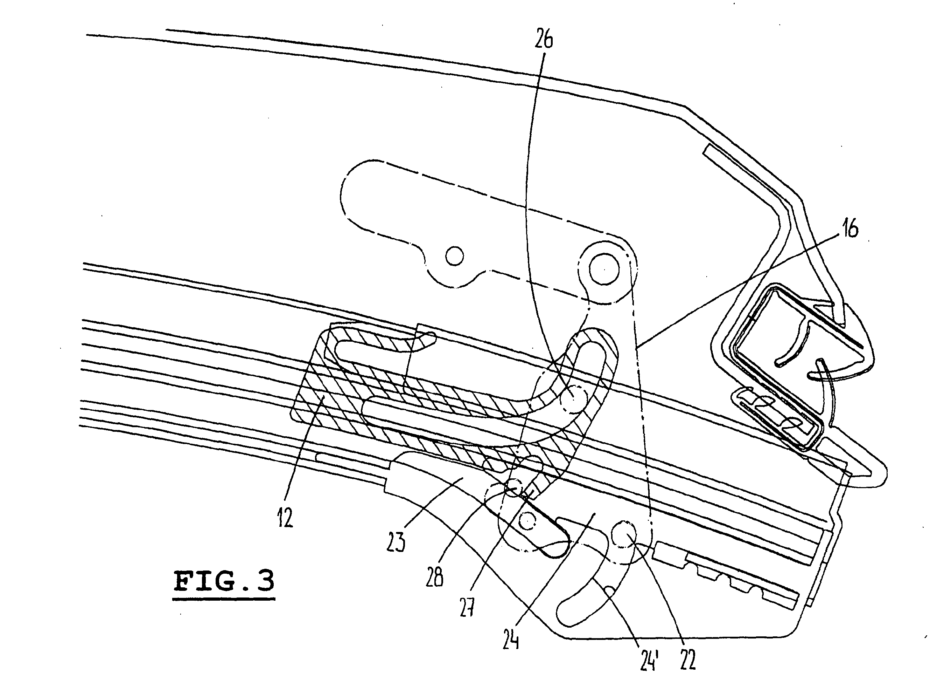

Such a movement of the closure means 4 away from the fixed roof construction 2 is allowed, because the locking member 29 has completely disengaged the pin 30 of the closure means 4. When the slide 12 has moved still further to the left (fig. 3) the link member 16 is rotated that far, that its second link member guide 22 has reached the connection between the first section 24 and the arc-shaped second section 24' of the second link member guide track. At this moment the hook member 27 of the slide 12 starts to engage the co-operating part 28 of the link member 16 (which in the embodiment illustrated is part of the first link member guide 21) and thus will entrain the link member 16. A movement of the link member 16 to the left (as seen in fig. 3) now is possible, because the second link member guide 22 has left the arc-shaped second section 24' of the second link member guide track. During such a movement of the link member 16 to the left its first link member guide 21 will move to the left in the first link member guide track 23, whereas its second link member guide 22 will move to the left in the first section 24 of the second link member guide track. As a result of such a movement, the closure means 4 also will be moved to the left. Basically, the rotational position of the link member 16 will not change anymore during such a movement to the left.

It is noted, that during the further movement of the guide mechanism to the left, the first link member guide 21 and the second link member guide 22 of the link member 16 will co-operate with the respective first link member guide track 23 and second link member guide track 24, such that a rotation of the link member 16 will be prevented.

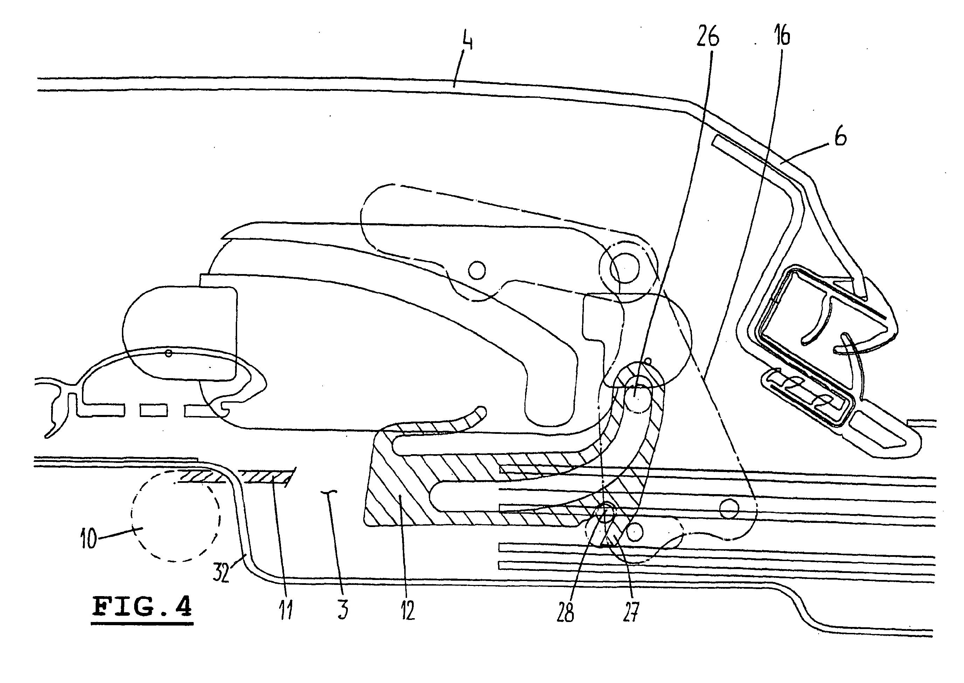

In figure 4 a position of the closure means 4 is shown which basically corresponds with its opening position. The rearward edge 6 of the closure means 4 nearly has reached a forward edge 32 of the roof opening 3. As can be seen, the link member 16 still is in its rotated position. The co-operating part 28 of the link member 16 is completely engaged by the hook member 27 of the slide 12.

When starting from the opening position illustrated in fig. 4, the closure means 4 has to be moved to the closing position illustrated in fig. 1, the slide 12 is moved to the right by the drive member 10 and drive means 11. Because a rotation of the link member 16 is not yet possible, the coupling pin 26 will maintain its position relative to the arc-shaped second part 15 of the curved track 16 of the slide 12. Thus the link member 16, and therefore the closure means 4, are moved along with the slide 12 to the right.

When the slide 12 has moved to the right sufficiently far, the first link member guide 21 will engage the stop 25, at which moment the second link member guide 22 has reached the connection between the first section 24 and arc-shaped second section 24' of the second link member guide track (figure 3). Then, a rotation of the link member 16 will occur, during which the coupling pin 26 will move along the arc-shaped second part 15 towards the first part 14 of the curved track 13, while the second link member guide 22 moves into the arc-shaped second section 24' of the second link member guide track. As a result the closure means 4 moves towards the fixed roof construction 2. When the second link member guide 22 has reached the end of the arc-shaped second section 24' of the second link member guide track the locking member 29 will engage the pin 30 and will firmly pull the closure means 4 against the fixed roof construction 2.

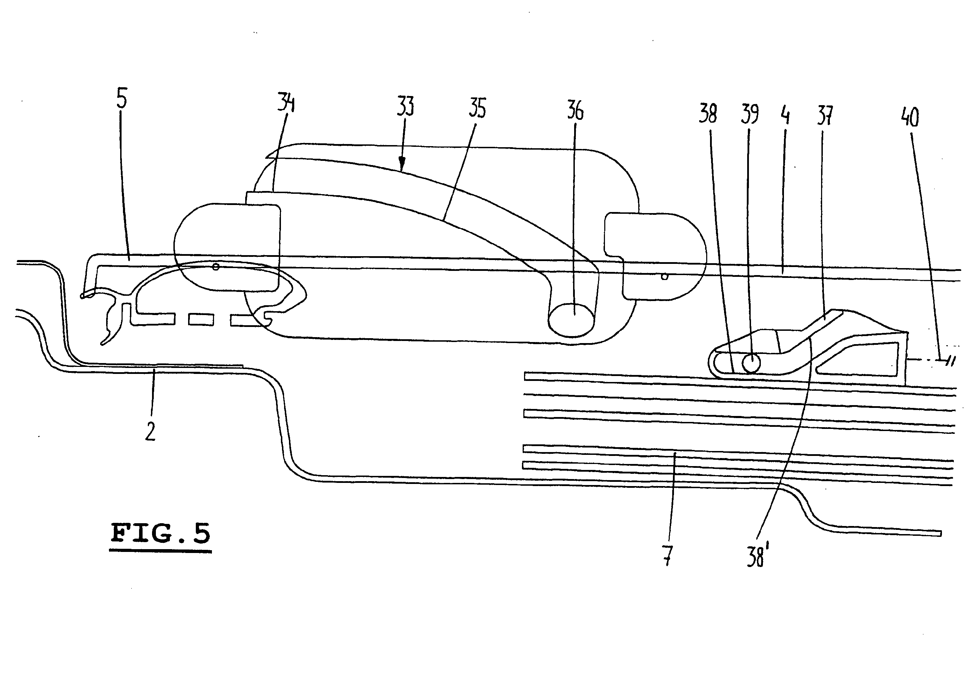

Next a guide mechanism provided for the movement of the forward edge 5 of the closure means 4 will be discussed while referring to figures 5-7.

In fig. 5 the forward edge 5 of the closure means 4 is in a position (closing position of the closure means 4) which basically corresponds with the position of the rearward edge 6 illustrated in fig. 1. A stationary guide track 33, which is attached to the fixed roof construction 2 in a manner not shown in detail, comprises a first section 34 which forwardly extends substantially in parallel to the stationary guiding 7 and which backwardly merges into a second section 35 extending transversely thereto in the direction of the fixed roof construction 2 or stationary guiding 7. It is noted, that in the figures only the first part of the first section 34 is illustrated; this first section 34 will extend further to the left along teh fixed roof construction 2. A first guide pin 36 is, in a manner not shown in detail, attached to the closure means 4 and, in the closing position of the closure means 4, is positioned at the end of the second section 35 of the stationary guide track 33.

The guide mechanism for the forward edge 5 further comprises a latching member 37 that can move along the stationary guiding 7. This latching member 37 comprises a latching track 38, 38' with a first part 38 substantially in parallel with the stationary guiding 7 and a second part 38' diverging backwardly therefrom towards the closure means 4. The closure means 4 comprises a second guide pin 39 to be engaged by the latching track 38, 38', and housed in the first part 38 thereof when the closure means 4 is in its closing position.

In a manner to be described later, the latching member 37 is connected with the slide 12 for at least temporarily moving therewith along the stationary guiding 7. Such a connection may be realised by means of a flexible cable 40, such as for example a Bowden cable.

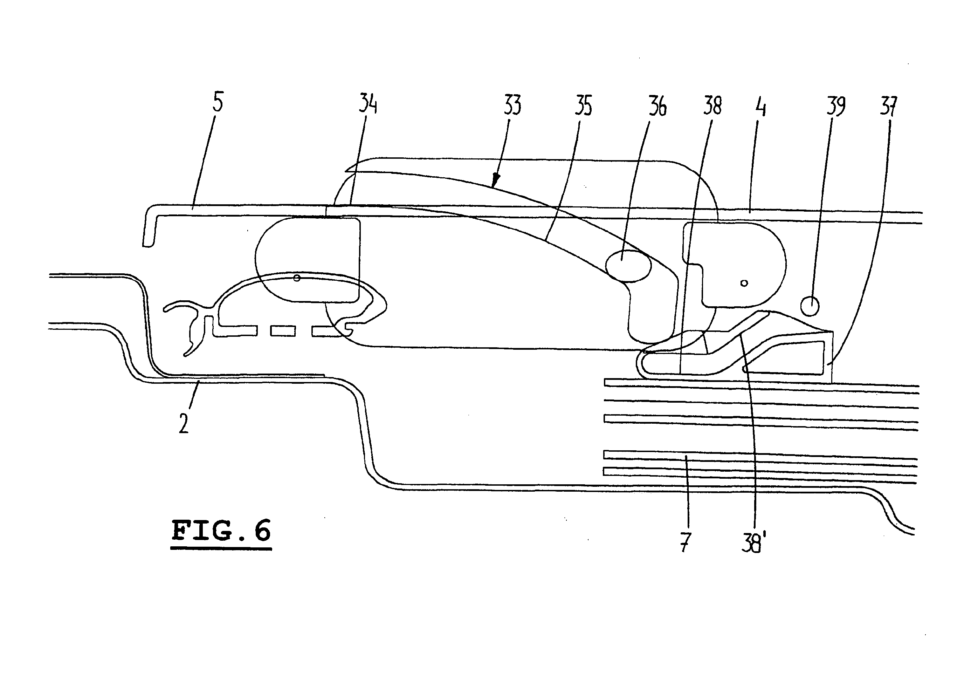

Referring to fig. 6, the latching member 37 has moved to the left to such an extent, that the second guide pin 39 has followed the first part 38 and next the second part 38' of the latching track and has left this latching track. As a result the forward edge 5 of the closure means 4 has been raised, such that the first guide pin 36 of the closure means 4 is moved upwardly in the second section 35 of the stationary guide track 33. This position of the forward edge 5 of the closure means 4 basically corresponds with the position of the rearward edge 6 as illustrated in fig. 3.

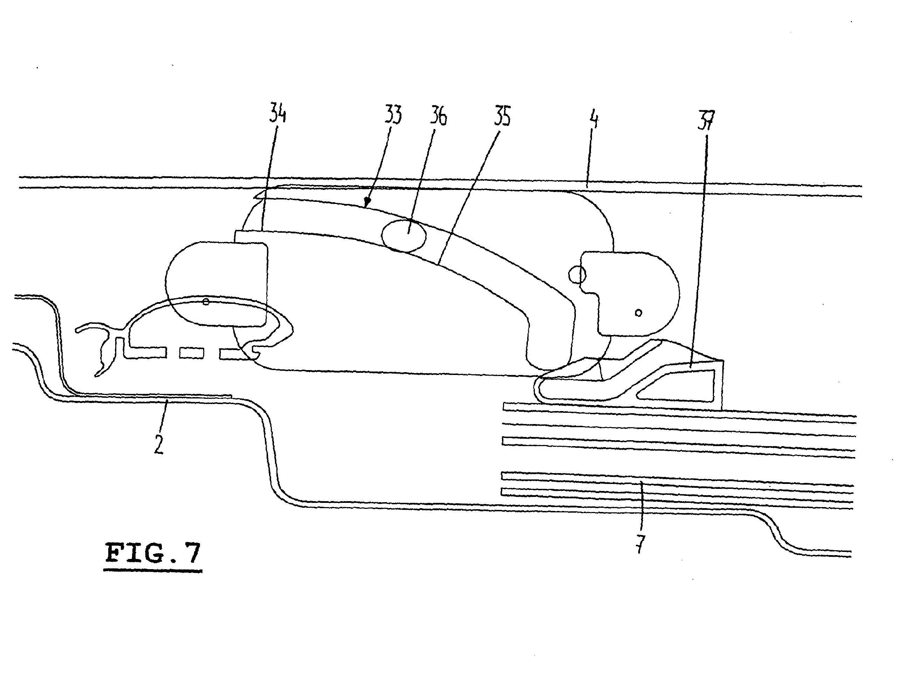

Because now the latching member 37 has disengaged the second guide pin 39 of the closure means 4, the closure means 4 is free to move to the left, as explained before in relation to the guide mechanism for the rearward edge 6, whereby the first guide pin 36 moves further towards the first section 34 of the stationary guide track 33 (fig. 7). During a further movement of the closure means 4 to the left (forward direction of the vehicle 1) the first guide pin 36 of the closure means 4 will follow the first section 34 of the stationary guide track 33 until the closure means 4 has reached its opening position (for example as shown in fig. 4, in which the rearward edge 6 is near to the forward edge 32 of the roof opening 3) .

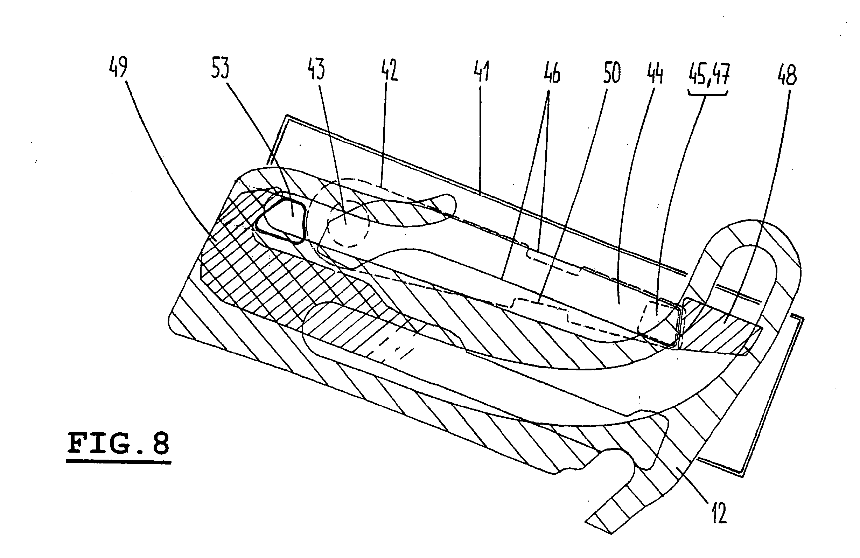

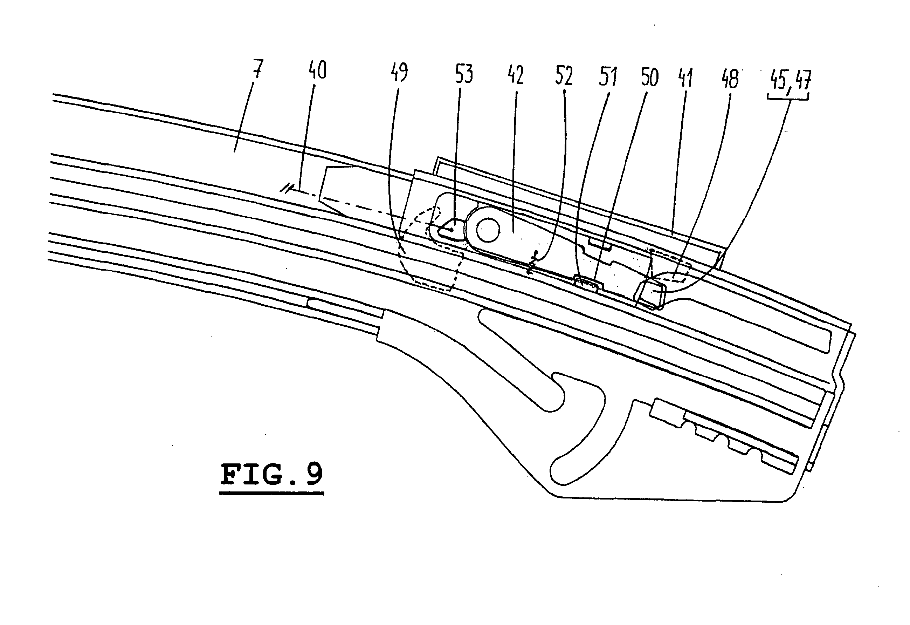

After the latching member 37 has disengaged the second guide pin 39 as illustrated in fig. 6, a further movement of the latching member 37 is no longer necessary. The connection between the latching member 37 and the slide 12 therefore is such, that the latching member 37 only temporarily moves along with the slide 12, as indicated before. A mechanism for realising such a temporarily common motion between the latching member 37 and the slide 12 will now be explained while referring to figures 8 and 9.

Referring to fig. 8, the slide 12 is shown in a hatched manner. Further a frame 41 (schematically indicated by double lines) of a coupling member is shown. In a manner not shown in detail this frame or coupling member 41 is movable along the stationary guiding 7 (see fig. 9). The frame 41 of the coupling member carries a pivot arm 42 (indicated in dotted lines) having a pivot axis 43. A free end 44 of the pivot arm 42 is provided with a guide projection 45 co-operating with a curved track 46 defined in the stationary guiding 7. Further, the pivot arm 42 comprises an engagement member 47 which, in the embodiment shown and as illustrated in figure 8, coincides with the guide projection 45.

The slide 12 is provided with a projection 48 which can engage the engagement member 47 of the pivot arm 42 when the pivot arm 42 is in the position as shown in figure 8 and as defined by the curved track 46. Thus, when the slide 12 moves to the left, the projection 48 pushes against the engagement member 47 and thus takes the pivot arm 42 and the frame 41 of the coupling member also to the left.

While moving to the left, the guide projection 45 follows the curved track 46 and will reach the position as shown in fig. 9. In this position, the pivot arm 42 has pivoted downwardly, such that the engagement member 47 no longer engages the projection 48 of the slide 12 (slide 12 is not indicated in fig. 9, only its projection 48 and an abutment means 49 to be described later).

When the pivot arm 42 has reached the position as illustrated in fig. 9, a further movement of the slide 12 to the left will not lead anymore to a corresponding movement of the coupling member to the left. Thus, the coupling member then maintains its position.

The pivot arm 42 is provided with a recess 50 which, in the pivot position illustrated in fig. 9, co-operates with a projection 51 of the stationary guiding 7. The co-operation between the recess 50 and projection 51 defines and maintains the position of the coupling member.

For securely maintaining this position of the pivot arm 42, it is possible that the pivot arm 42 is spring loaded towards its second pivot position by means of a spring member 52.

The connection between the coupling member (frame 41) and the latching member 37 may be realised by the flexible cable 40, as indicated before. An additional abutment means 53 attached to the frame 41 engages the pivot arm 42, thus ensuring an effective transfer of the force exerted on the pivot arm 42 by the projection 48 of the slide 12.

As indicated in fig. 8 and fig. 9 the slide 12 further is provided with an abutment means 49. When the slide 12 moves back to the right to its original position as shown in fig. 8 (closing position of the closure means 4) this abutment means 49 will engage the coupling member, for example the additional abutment means 53 thereof, and thus moves the coupling means along to the right. During this movement of the coupling means the pivot arm 42, due to the co-operation between the guide projection 45 and the curved track 46, will pivot to its pivot position as illustrated in fig. 8, in which the engagement member 47 of the pivot arm 42 is again in a position to be engaged by the projection 48 of the slide 12.

As a result of the described embodiment of the coupling member, the latching member 37 of the guide mechanism of the forward edge 5 of the closure means 4 is connected to the slide 12 in such a manner, that the latching member 37 only moves together with the slide 12 until the second guide pin 39 (fig. 5) has moved out of the latching track 38, 38' of the latching member 37. Thus, the situation illustrated in fig. 9 basically corresponds with the situation illustrated in fig. 6.

The coupling member described before also could be provided between another pair of parts of an open roof construction, which are movable along a stationary guiding 7.

The invention is not limited to the embodiment described before which may be varied widely within the scope of the invention as defined by the claims.

## Claims

1. Open roof construction for a vehicle (1), comprising a roof opening (3) defined in a fixed roof construction (2) of the vehicle, and a panel-shaped closure means (4) for the roof opening movable between a closing position for closing said roof opening and an opening position for at least partially exposing said roof opening, said closure means having a forward edge (5) and a rearward edge (6), wherein during transition of the closure means from one of said positions towards the other of said positions at least one of said forward and rearward edges of the closure means also is moved in a direction towards or away from, respectively, the fixed roof construction, and wherein a guide mechanism is provided for the movement of at least one of said edges of the closure means, said guide mechanism comprising:
- a stationary guiding (7) attached to the fixed roof construction (2) and extending in the longitudinal direction of the vehicle;
- a slide (12) engaging the guiding (7) and being driven by a drive means (10) for a guided movement along the guiding;
- a link member (16) having a first end (17) that hingeably engages the closure means and an opposite second end (20) that slidingly and hingeably engages the stationary guiding, and which link member further is provided with means operatively connecting it to the slide in such a manner, that when the slide moves from a position in which the closure means closes the roof opening towards a position in which the closure means exposes the roof opening the link member firstly rotates such as to move the respective edge of the closure means away from the fixed roof construction and thereafter moves along with the slide while maintaining its rotated position such as to move the closure means substantially in parallel to the guiding, **characterized in that** the slide (12) is provided with a curved track (13) and the link member (16) is provided with a coupling pin (26) positioned intermediate its first end (17) and opposite second end (20) and housed within the curved track.

2. Open roof construction according to claim 1, wherein the curved track (13) comprises a first part (14) extending substantially in parallel to the direction of movement of the slide, and an arc-shaped second part (15) diverging therefrom towards the closure means.

3. Open roof construction according to any of the previous claims, wherein the slide (12) comprises a locking member (29) for locking a pin (30) of the closure means (4) when the latter is in its closing position.

4. Open roof construction according to claim 3, wherein the locking member (29) is a hook.

5. Open roof construction according to any of the previous claims, wherein the slide (12) comprises a hook member (27) for engaging a co-operating part (28) of the link member (16) in its rotated position.

6. Open roof construction according to any of the previous claims, wherein the respective edge of the closure means (4) is the rearward edge (6).

7. Open roof construction according to claim 6, wherein a further guide mechanism is provided for the movement of the forward edge (5) of the closure means (4), said further guide mechanism comprising:
- a stationary guide track (33) attached to the fixed roof construction (2), with a first section (34) forwardly extending substantially in parallel to the stationary guiding (7) and backwardly merging into a second section (35) extending transversally thereto in the direction of the fixed roof construction;
- a first guide pin (36) attached to the closure means (4) and engaging said stationary guide track (33);
- a latching member (37) connected with the slide (12) for at least temporarily moving therewith along the stationary guiding (7), said latching member comprising a latching track with a first part (38) substantially in parallel with the stationary guiding (7) and a second part (38') diverging backwardly therefrom towards the closure means, whereas the closure means comprises a second guide pin (39) to be engaged by the latching track of the latching member when the closure means moves towards the closing position.

8. Open roof construction according to claim 7, wherein the latching member (37) is connected to the slide (12) by a coupling member in such a manner, that the latching member only moves together with the slide until the second guide pin (39) of the closure means has moved out of the latching track.

9. Open roof construction according to claim 8, wherein the coupling member (41) is guided in the stationary guiding (7) and carries a pivot arm (42), a free end (44) of which is provided with a guide projection (45) co-operating with a curved track (46) defined in the stationary guiding (7), said pivot arm further comprising an engagement member (47) which, when the slide (12) moves in a direction for opening the closure means, engages a projection (48) of the slide when the pivot arm is in a first one of its extreme pivot positions as defined by the co-operation between the guide projection (45) and the curved track (46), whereas the engagement member disengages the slide projection when the pivot arm has reached its second extreme pivot position, and wherein the slide (12) further is provided with an abutment means (49) which, when the slide moves in a direction for closing the closure means, will engage the coupling member (41).

10. Open roof construction according to claim 9, wherein the pivot arm (42) is spring (52) loaded toward its second extreme pivot position in which the engagement member (47) disengages the projection (48) of the slide.

11. Open roof construction according to claim 9 or 10, wherein the pivot arm is provided with a recess (50) co-operating with a projection (51) of the stationary guiding (7) for defining the position of the coupling member in its second extreme pivot position.

12. Open roof construction according to any of the claims 8-11, wherein the latching member (37) is connected to the coupling member by means of a flexible cable (40), such as for example a Bowden cable.

13. Open roof construction according to any of the previous claims, wherein the drive means for the slide is a flexible cable, such as for example a Bowden cable.

## Patentansprüche

1. Offendachkonstruktion für ein Fahrzeug (1), aufweisend eine Dachöffnung (3), welche in einer Festdachkonstruktion (2) des Fahrzeugs definiert ist, und ein paneelförmiges Schließmittel (4) für die Dachöffnung, welches zwischen einer Schließposition zum Schließen der Dachöffnung und einer Offenposition zum wenigstens teilweise Freigeben der Dachöffnung bewegbar ist, wobei das Schließmittel einen Vorderrand (5) und einen Hinterrand (6) hat, wobei während des Übergangs des Schließmittels aus einer der Positionen hin zu den anderen Positionen mindestens einer von dem Vorder- bzw. Hinterrand des Schließmittels ebenfalls in einer Richtung hin zu oder weg von der Festdachkonstruktion bewegt wird, und wobei ein Führungsmechanismus für die Bewegung von mindestens einem der Ränder des Schließmittels vorgesehen ist, wobei der Führungsmechanismus aufweist:
- eine stationäre Führung (7), welche an der Festdachkonstruktion (2) angebracht ist und sich in Längsrichtung des Fahrzeugs erstreckt,
- einen Läufer (12), der im Eingriff mit der Führung (7) steht und mittels eines Antriebsmittels (10) zum Führen der Bewegung entlang der Führung angetrieben wird,
- ein Anschlusselement (16), welches ein erstes Ende (17), welches im gelenkigen Eingriff mit dem Schließmittel steht, und ein gegenüberliegendes zweites Ende (20) hat, welches im verschiebbaren und gelenkigen Eingriff mit der stationären Führung steht, und welches Anschlusselement ferner mit Mitteln versehen ist, welche es an dem Läufer wirksam anschließen, so dass, wenn der Läufer aus einer Position, in welcher das Schließmittel die Dachöffnung schließt, hin zu einer Position bewegt wird, in welcher das Schließmittel die Dachöffnungen freigibt, das Anschlusselement zuerst gedreht wird, so dass der jeweilige Rand des Schließelements weg von der Festdachkonstruktion bewegt wird und danach zusammen mit dem Läufer bewegt wird, während es seine Drehposition beibehält, so dass das Schließmittel im Wesentlichen parallel zu der Führung bewegt wird, **dadurch gekennzeichnet, dass** der Läufer (12) mit einer gekurvten Bahn (13) versehen ist und das Anschlusselement (16) mit einem zwischen seinem ersten Ende (17) und seinem gegenüberliegenden zweiten Ende (20) angeordneten Kupplungsstift (26) versehen ist, welcher in der gekurvten Bahn untergebracht ist.

2. Offendachkonstruktion gemäß Anspruch 1, wobei die gekurvte Bahn (13) einen ersten Abschnitt (14) aufweist, der sich im Wesentlichen parallel zur Bewegungsrichtung des Läufers erstreckt, und einen bogenförmigen zweiten Abschnitt (15) aufweist, der davon zu dem Schließmittel hin abweicht.

3. Offendachkonstruktion gemäß einem der vorhergehenden Ansprüche, wobei der Läufer (12) ein Verriegelungselement (29) zum Verriegeln eines Stifts (30) des Schließmittels (4) aufweist, wenn das Letztere in seiner Schließposition ist.

4. Offendachkonstruktion gemäß Anspruch 3, wobei das Verriegelungselement (29) ein Haken ist.

5. Offendachkonstruktion gemäß einem der vorhergehenden Ansprüche, wobei der Läufer (12) ein Hakenelement (27) zum In-Eingriff-Bringen mit einem Zusammenwirkabschnitt (28) des Anschlusselements (16) in seiner Drehposition aufweist.

6. Offendachkonstruktion gemäß einem der vorhergehenden Ansprüche, wobei der jeweilige Rand des Schließmittels (4) der Hinterrand (6) ist.

7. Offendachkonstruktion gemäß Anspruch 6, wobei ein weiterer Führungsmechanismus für die Bewegung des Vorderrandes (5) des Schließmittels (4) vorgesehen ist, wobei der weitere Führungsmechanismus aufweist:
- eine stationäre Führungsbahn (33), die an der Festdachkonstruktion (2) angebracht ist, mit einem ersten Abschnitt (34), der sich vorwärts im wesentlichen parallel zu der stationären Führung (7) erstreckt und rückwärts in einen zweiten Abschnitt (35) übergeht, der sich dazu quer in Richtung der Festdachkonstruktion erstreckt,
- einen ersten Führungsstift (36), der an dem Schließmittel (4) angebracht ist und im Eingriff mit der stationären Führungsbahn (33) steht,
- ein Einklinkelement (37), welches mit dem Läufer (12) zur wenigstens temporären Bewegung an demselben entlang der stationären Führung (7) angeschlossen ist, wobei das Einklinkelement eine Einklinkbahn mit einem ersten Abschnitt (38), der sich im Wesentlichen parallel zu der stationären Führung (7) erstreckt, und mit einem zweiten Abschnitt (38') aufweist, der rückwärts davon hin zu dem Schließenelement abweicht, wobei das Schließmittel einen zweiten Führungsstift (39) aufweist, der von der Einklinkbahn des Einklinkelements in Eingriff gebracht wird, wenn das Schließmittel hin zu der Schließposition bewegt wird.

8. Offendachkonstruktion gemäß Anspruch 7, wobei das Einklinkelement (37) an dem Läufer (12) mittels eines Kupplungselements derart angeschlossen ist, dass das Einklinkelement nur zusammen mit dem Läufer bewegt wird, bis der zweite Führungsstift (39) des Schließmittels aus der Einklinkbahn heraus bewegt worden ist.

9. Offendachkonstruktion gemäß Anspruch 8, wobei das Kupplungselement (41) in der stationären Führung (7) geführt wird und einen Schwenkarm (42) trägt, wobei ein freies Ende (44) desselben mit einem Führungsvorsprung (45) versehen ist, der mit einer gekrümmten Bahn (46) zusammenwirkt, die in der stationären Führung (7) definiert ist, wobei der Schwenkarm ferner ein Eingriffselement (47) aufweist, welches, wenn der Läufer (12) in einer Richtung zum Öffnen des Schließmittels bewegt wird, in Eingriff mit einem Vorsprung (48) des Läufers kommt, wenn der Schwenkarm in einer ersten von seinen Extrem-Schwenkpositionen ist, wie durch das Zusammenwirken zwischen dem Führungsvorsprung (45) und der gekrümmten Bahn (46) definiert, wobei das Eingriffselement von dem Läufervorsprung losgekuppelt wird, wenn der Schwenkarm seine zweite Extrem-Schwenkposition erreicht hat, und wobei der Läufer (12) ferner mit einem Anschlagmittel (49) versehen ist, welches, wenn der Läufer in einer Richtung zum Schließen des Schließmittels bewegt wird, in Eingriff mit dem Kupplungselement (41) kommt.

10. Offendachkonstruktion gemäß Anspruch 9, wobei der Schwenkarm (42) zu seiner zweiten Extrem-Schwenkposition feder-(52)-belastet ist, in welcher der Vorsprung (48) des Läufers von dem Eingriffselement (47) loskuppelt wird.

11. Offendachkonstruktion gemäß Anspruch 9 oder 10, wobei der Schwenkarm mit einer Ausnehmung (50), welche mit einem Vorsprung (51) der stationären Führung (7) zusammenwirkt, zum Definieren der Position des Kupplungselements in seiner zweiten Extrem-Schwenkposition versehen ist.

12. Offendachkonstruktion gemäß einem der Ansprüche 8 bis 11, wobei das Einklinkelement (37) an dem Kupplungselement mittels eines flexiblen Kabels (40) wie beispielsweise einem Bowdenzug angeschlossen ist.

13. Offendachkonstruktion gemäß einem der vorhergehenden Ansprüche, wobei das Antriebsmittel für den Läufer ein flexibles Kabel wie beispielsweise ein Bowdenzug ist.

## Revendications

1. Structure de toit ouvrant pour un véhicule (1), comprenant une ouverture de toit (3) définie dans une structure de toit fixe (2) du véhicule, et des moyens de fermeture de la forme d'un panneau (4) pour l'ouverture du toit, déplaçable entre une position fermée pour fermer ladite ouverture de toit et une position ouverte pour au moins exposer partiellement ladite ouverture de toit, lesdits moyens de fermeture ayant un bord avant (5) et un bord arrière (6), dans laquelle pendant le passage des moyens de fermeture de l'une desdites positions vers l'autre desdites positions, au moins l'un desdits bords avant et arrière des moyens de fermeture est également déplacé dans une direction vers ou loin de, respectivement, la structure de toit fixe, et dans laquelle un mécanisme de guidage est pourvu pour le déplacement d'au moins un desdits bords des moyens de fermeture, ledit mécanisme de guidage comprenant :
- un guidage fixe (7) attaché à la structure de toit fixe (2) et s'étendant dans la direction longitudinale du véhicule ;
- une glissière (12) à engagement avec le guidage (7) et étant entraînée par des moyens d'entraînement (10) pour un déplacement guidé le long du guidage ;
- un organe d'articulation (16) ayant une première extrémité (17) qui met en prise par ses charnières les moyens de fermeture et une seconde extrémité opposée (20) qui met en prise de manière coulissante et par ses charnières le guidage fixe, et dont l'organe d'articulation est en outre pourvu de moyens le connectant à la glissière de telle manière que, quand la glissière se déplace d'une position dans laquelle les moyens de fermeture ferment le toit ouvrant vers une position dans laquelle les moyens de fermeture exposent le toit ouvrant, l'organe d'articulation tourne d'abord de manière à déplacer le bord respectif des moyens de fermeture loin de la structure de toit fixe, et par la suite se déplace avec la glissière tout en maintenant sa position de rotation de manière à déplacer les moyens de fermeture essentiellement parallèlement au guidage, **caractérisé en ce que** la glissière (12) est pourvu d'un rail incurvé (13) et l'organe d'articulation (16) est pourvu d'un axe de raccordement (26) positionné intermédiaire à sa première extrémité (17) et opposé à sa seconde extrémité (20) et enchâssé dans le rail incurvé.

2. Structure de toit ouvrant selon la revendication 1, dans laquelle le rail incurvé (13) comprend une première partie (14) s'étendant essentiellement parallèlement à la direction du déplacement de la glissière, et une seconde partie en forme d'arc (15) s'écartant en direction des moyens de fermeture.

3. Structure de toit ouvrant selon l'une quelconque des revendications précédentes, dans laquelle la glissière (12) comprend un organe de blocage (29) pour bloquer un axe (30) des moyens de fermeture (4) quand ce dernier est dans sa position fermée.

4. Structure de toit ouvrant selon la revendication 3, dans laquelle l'organe de blocage (29) est un crochet.

5. Structure de toit ouvrant selon l'une quelconque des revendications précédentes, dans laquelle la glissière (12) comprend un organe d'accroche (27) pour mettre en prise une partie de coopération (28) de l'organe d'articulation (16) dans sa position de rotation.

6. Structure de toit ouvrant selon l'une quelconque des revendications précédentes, dans laquelle le bord respectif des moyens de fermeture (4) est le bord arrière (6).

7. Structure de toit ouvrant selon la revendication 6, dans laquelle un mécanisme de guidage supplémentaire est fourni pour le déplacement du bord avant (5) des moyens de fermeture (4), ledit mécanisme de guidage supplémentaire comprenant :
- un rail de guidage fixe (33) attaché à la structure du toit fixe (2), avec une première section (34) s'étendant essentiellement à l'avant parallèlement au guidage fixe (7) et se raccordant à l'arrière à une seconde section (35) s'étendant transversalement à l'arrière dans la direction de la structure de toit fixe ;
- un premier axe de guidage (36) attaché aux moyens de fermeture (4) et s'engageant avec ledit rail de guidage fixe (33) ;
- un organe de verrouillage (37) relié à la glissière (12) pour au moins se déplacer temporairement avec celle-ci le long du guidage fixe (7), ledit organe de verrouillage comprenant un rail de verrouillage avec une première partie (38) essentiellement parallèle au guidage fixe (7) et une seconde partie (38') s'écartant en arrière vers les moyens de fermeture, alors que les moyens de fermeture comprennent un second axe de guidage (39) à engagement avec le rail de verrouillage de l'organe de verrouillage quand les moyens de fermeture se déplacent vers la position de fermeture.

8. Structure de toit ouvrant selon la revendication 7, dans laquelle l'organe de verrouillage (37) est relié à la glissière (12) par un organe de raccordement de telle manière que seul l'organe de verrouillage se déplace avec la glissière jusqu'à ce que le second axe de guidage (39) des moyens de fermeture se soit déplacé hors du rail de verrouillage.

9. Structure de toit ouvrant selon la revendication 8, dans laquelle l'organe de raccordement (41) est guidé dans le guidage fixe (7) et porte un bras pivotant (42), dont une extrémité libre (44) est pourvue d'une avancée de guidage (45) coopérant avec un rail incurvé (46) défini dans le guidage fixe (7), ledit bras pivotant comprenant en outre un organe d'engagement (47) qui, quand la glissière (12) se déplace dans une direction pour ouvrir les moyens de fermeture, met en prise une avancée (48) de la glissière quand le bras pivotant est dans une première des ses positions extrêmes pivotantes comme défini par la coopération entre l'avancée du guide (45) et le rail incurvé (46), alors que l'organe de mise en prise dégage l'avancée de la glissière quand le bras pivotant a atteint sa seconde position extrême pivotante, et dans laquelle la glissière (12) est pourvue en outre de moyens de butée (49) qui, quand la glissière de déplace dans une direction pour fermer les moyens de fermeture, mettra en prise l'organe de raccordement (41).

10. Structure de toit ouvrant selon la revendication 9, dans laquelle le bras pivotant (42) est à ressort (52) vers sa seconde position extrême pivotante dans laquelle l'organe de mise en prise (47) dégage l'avancée (48) de la glissière.

11. Structure de toit ouvrant selon la revendication 9 ou 10, dans laquelle le bras pivotant est fourni avec un logement (50) coopérant avec une avancée (51) du guidage fixe (7) pour définir la position de l'organe de raccordement dans sa seconde position extrême pivotante.

12. Structure de toit ouvrant selon l'une quelconque des revendications 8 à 11, dans laquelle l'organe de verrouillage (37) est relié à l'organe de raccordement au moyen d'un câble flexible (40), tel que par exemple un câble Bowden.

13. Structure de toit ouvrant selon l'une quelconque des revendications précédentes, dans laquelle les moyens d'entraînement de la glissière sont un câble flexible, tel que par exemple un câble Bowden.
